# EUROPÄISCHE PATENTSCHRIFT

(11) **EP 2 091 270 B1**
(45) Veröffentlichungstag und Bekanntmachung des Hinweises auf die Patenterteilung: **21.07.2010**
(21) Anmeldenummer: 09150994.3
(22) Anmeldetag: 21.01.2009
(51) Int. Cl.: H04R 25/00, H01M 2/10

(54) **Hörvorrichtung mit Batteriefachrastung**
Hearing aid with latching battery compartment
Dispositif auditif doté d'une butée de boîtier à batteries

(30) Priorität: 12.02.2008 DE 102008008668
(43) Veröffentlichungstag der Anmeldung: 19.08.2009
(73) Patentinhaber: Siemens Medical Instruments Pte. Ltd., Singapore 139959 (SG)
(72) Erfinder: Ruppert, Josef, 91077, Kleinsendelbach (DE)
(74) Vertreter: Maier, Daniel Oliver

(56) Entgegenhaltungen:
- EP-A- 0 004 988
- EP-A- 0 309 834
- EP-A- 0 332 938
- EP-A- 0 674 465

## Beschreibung

Die vorliegende Erfindung betrifft eine Hörvorrichtung mit einem Gehäuse und/oder Rahmen sowie einem Batteriefach, das in oder an dem Gehäuse oder Rahmen schwenkbar gelagert ist. Unter dem Begriff Hörvorrichtung wird hier jedes am oder im Ohr tragbare, schallausgebende Gerät, insbesondere ein Hörgerät, ein Headset, Kopfhörer und dergleichen verstanden.

Hörgeräte sind tragbare Hörvorrichtungen, die zur Versorgung von Schwerhörenden dienen. Um den zahlreichen individuellen Bedürfnissen entgegenzukommen, werden unterschiedliche Bauformen von Hörgeräten wie Hinter-dem-Ohr-Hörgeräte (HdO), Hörgerät mit externem Hörer (RIC: receiver in the canal) und In-dem-Ohr-Hörgeräte (IdO), z.B. auch Concha-Hörgeräte oder Kanal-Hörgeräte (ITE, CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

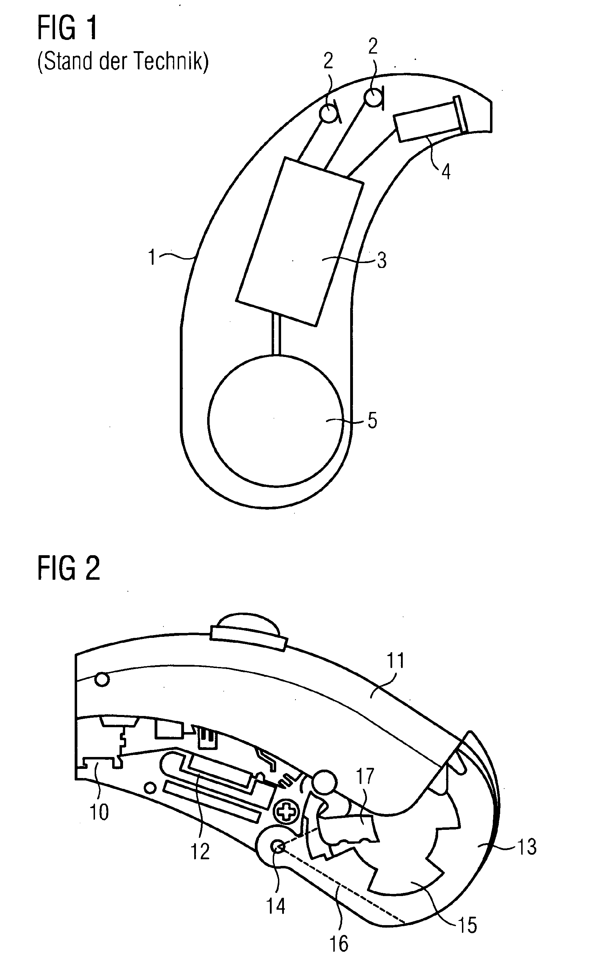

Hörgeräte besitzen prinzipiell als wesentliche Komponenten einen Eingangswandler, einen Verstärker und einen Ausgangswandler. Der Eingangswandler ist in der Regel ein Schallempfänger, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinheit integriert. Dieser prinzipielle Aufbau ist in FIG 1 am Beispiel eines Hinter-dem-Ohr-Hörgeräts dargestellt. In ein Hörgerätegehäuse 1 zum Tragen hinter dem Ohr sind ein oder mehrere Mikrofone 2 zur Aufnahme des Schalls aus der Umgebung eingebaut. Eine Signalverarbeitungseinheit 3, die ebenfalls in das Hörgerätegehäuse 1 integriert ist, verarbeitet die Mikrofonsignale und verstärkt sie. Das Ausgangssignal der Signalverarbeitungseinheit 3 wird an einen Lautsprecher bzw. Hörer 4 übertragen, der ein akustisches Signal ausgibt. Der Schall wird gegebenenfalls über einen Schallschlauch, der mit einer Otoplastik im Gehörgang fixiert ist, zum Trommelfell des Geräteträgers übertragen. Die Energieversorgung des Hörgeräts und insbesondere die der Signalverarbeitungseinheit 3 erfolgt durch eine ebenfalls ins Hörgerätegehäuse 1 integrierte Batterie 5.

Batterien eines HdO- oder IdO-Hörgeräts werden in der Regel mit Hilfe eines Batteriefachs in dem Hörgerät gehalten. Meist ist dieses Batteriefach schwenkbar. Im eingeschwenkten Zustand befindet sich die Batterie in einer Betriebsstellung, während sie in einem ausgeschwenkten Zustand des Batteriefachs aus dem Hörgerät entnommen werden kann.

Oftmals dient ein bewegbares bzw. schwenkbares Batteriefach auch zum Ein- und Ausschalten des Hörgeräts. Wird das Batteriefach geöffnet, so wird damit gleichzeitig das Hörgerät ausgeschaltet. Umgekehrt ist das Hörgerät nur eingeschaltet, wenn das Batteriefach vollständig geschlossen ist. Das Einund Ausschalten des Hörgeräts mit Hilfe des Batteriefachs hat jedoch den Nachteil, dass im ausgeschalteten Zustand, d. h. bei offenem Batteriefach, die Batterie aus dem Batteriefach unbeabsichtigt herausfallen kann. Weiterhin hat ein bewegbares Batteriefach zum Ein- und Ausschalten des Hörgeräts den Nachteil, dass das Batteriefach leicht unbeabsichtigt geschlossen werden kann, so dass das Hörgerät eingeschaltet wird, und es somit zu einer ungewollten Entladung der Batterie beispielsweise im abgelegten Zustand des Hörgeräts kommt.

In der EP 0 309 834 A1 werden ein Hörgerätegehäuse und eine Batterielade offenbart, wobei die Batterielade in verschiedene Schwenkpositionen gebracht werden kann. Die Batterielade wird in jeder Schwenkposition fest an ein Scharnier gedrückt, Nachteilig daran ist ein relativ großer Widerstand beim Schwenken der Batterielade.

In der EP 0 332 938 A1 wird ein Hörgerät mit einer Batterielade mit außenseitig angeformter Handhabe angegeben. Die Handhabe umfasst eine Rastnase, die in zwei Rastmulden des Hörgerätegehäuses rastbar ist.

Des Weiteren gibt die EP 0 004 988 A1 ein Hörgerät mit Batterielade an, wobei die Batterielade an der Außenseite mehrere Mulden aufweist, in die eine am Hörgerätegehäuse angeordnete Kugel durch Federkraft rasten kann.

Außerdem wird in der EP 0 674 465 A1 eine Batterielade eines Hörgeräts offenbart, die eine Öffnung aufweist, um die die Batterielade im Hörgerätegehäuse schwenkbar angeordnet ist.

Die Aufgabe der vorliegenden Erfindung besteht somit darin, eine Hörvorrichtung und insbesondere ein Hörgerät dahingehend zu verbessern, dass es hinsichtlich des Batteriefachschalters sicherer betrieben werden kann.

Erfindungsgemäß wird diese Aufgabe gelöst durch eine Hörvorrichtung mit einem Gehäuse und/oder Rahmen und einem Batteriefach, das in oder an dem Gehäuse oder Rahmen schwenkbar zwischen einer Offenstellung und einer Geschlossenstellung gelagert ist, wobei das Batteriefach bezogen auf die Schwenkachse radial innerhalb des Batterieladebereichs ein erstes Rastelement aufweist und an dem Gehäuse oder Rahmen ein mit dem ersten Rastelement korrespondierendes zweites Rastelement angebracht ist, so dass das Batteriefach in einer vorgegebenen Schwenkposition zwischen der Offenstellung und der Geschlossenstellung lösbar einrastet.

In vorteilhafter Weise ist es so möglich, dass das Batteriefach durch den Rastmechanismus zuverlässig in einer Zwischenstellung zwischen der Offenstellung und der Geschlossenstellung gehalten werden kann. Damit kann zumindest gewährleistet werden, dass das Batteriefach sich nicht ohne weiteres in die Geschlossenstellung bewegt.

Erfindungsgemäß weist das Batteriefach ein ringförmiges Lagerelement auf, in dessen Zentrum die Schwenkachse verläuft und das am Außenumfang mit einer Rastnase als erstes Rastelement versehen ist. Das Gehäuse oder der Rahmen können hierzu eine mit der Rastnase korrespondierende Rastmulde als zweites Rastelement aufweisen. Mit einer derartigen Konstruktion lässt sich ein Rastmechanismus im Achsbereich des schwenkbaren Batteriefachs realisieren.

In einer Weiterbildung der genannten Hörvorrichtung ist zumindest ein Teil der Rastmulde mit einer elastischen Wand gebildet, die durch die Rastnase in radialer Richtung bezogen auf die Schwenkachse federnd bewegbar ist. Durch diese federnde Bewegbarkeit der Wand kann die Abnutzung an dem Rastmechanismus verringert werden.

Darüber hinaus kann das erste Rastelement des Batteriefachs auch aus einem weicheren Kunststoff bestehen, als das zweite Rastelement des Gehäuses oder Rahmens. Diese Maßnahme reduziert zumindest bei dem Gehäuse oder Rahmen die Geschwindigkeit der Abnutzung, denn ein Batteriefach lässt sich wesentlich kostengünstiger ersetzen.

Weiterhin kann eine Batterie aus dem Batteriefach in axialer Richtung bezogen auf die Schwenkachse in einer Entnahmeposition des Batteriefachs entnehmbar sein, während in der vorgegebenen Schwenkposition, in der das Batteriefach eingerastet ist, durch einen Teil des Gehäuses eine Entnehmbarkeit der Batterie aus dem Batteriefach nicht gegeben ist. Auf diese Weise kann sichergestellt werden, dass die Batterie aus dem Batteriefach in der eingerasteten Zwischenstellung nicht unbeabsichtigt herausfällt. Das Batteriefach ist dann betrachtet aus der Geschlossenstellung über die Einraststellung (vorgegebene Schwenkposition) in die Offenstellung zu schwenken, damit die Batterie entnommen werden kann.

Des Weiteren kann an dem Batteriefach oder dem Gehäuse oder Rahmen radial innerhalb des Batterieladebereichs ein drittes Rastelement angeordnet sein, um mit dem ersten oder zweiten Rastelement zusammenzuwirken, so dass das Batteriefach auch in einer weiteren, von der vorgegebenen Schwenkposition verschiedenen Schwenkposition einrastbar ist. Damit kann beispielsweise auch für die Offenstellung und/oder die Geschlossenstellung des Batteriefachs im Achsbereich des Batteriefachs ein Rastmechanismus bereitgestellt werden.

Die vorliegende Erfindung wird nun anhand der beigefügten Zeichnungen näher erläutert, in denen zeigen:
- FIG 1: eine Prinzipskizze eines Hörgeräts mit seinen wesent- lichen Komponenten gemäß dem Stand der Technik;
- FIG 2: ein HdO-Hörgerät mit einem Batteriefach in der Ge- schlossenstellung;
- FIG 3: das HdO-Hörgerät von FIG 2 mit Batteriefach in einer eingerasteten Zwischenstellung;
- FIG 4: das HdO-Hörgerät von FIG 2 mit Batteriefach in der Offenstellung;
- FIG 5: ein Teil des Batteriefachschwenklagers am Hörgeräte- rahmen;
- FIG 6: ein Teil des Batteriefachschwenklagers am Batterie- fach;
- FIG 7: ein vergrößerter Ausschnitt aus FIG 3;
- FIG 8: das Hörgerät von FIG 3 bzw. FIG 7 mit aufgeschraubtem unteren Gehäuseteil und
- FIG 9: eine alternative Ausführungsform des Schwenklager- teils im Vergleich zu dem von FIG 5.

Die nachfolgend näher geschilderten Ausführungsbeispiele stellen bevorzugte Ausführungsformen der vorliegenden Erfindung dar.

In FIG 2 ist ein HdO-Hörgerät dargestellt, an dessen Rahmen 10 nur das Gehäuseoberteil 11 aber nicht das untere Gehäuseoberteil befestigt ist. In dem Rahmen sind zahlreiche Elektronikkomponenten 12 eingebaut. Weiterhin ist an dem Rahmen ein Batteriefach 13 schwenkbar an einer Drehachse 14 gelagert. Das Batteriefach 13 beherbergt eine Batterie 15 in Form einer Knopfzelle.

Das Batteriefach 13 ist in Fig. 2 in einer Geschlossenstellung dargestellt. In dieser Geschlossenstellung definiert eine parallel zur Unterkante des Batteriefachs 13 durch die Drehachse 14 verlaufende Gerade eine Bezugslinie 16.

In der Geschlossenstellung stehen die Kontakte 17, von denen nur einer in FIG 2 zu erkennen ist, mit der Batterie 15 in Verbindung, so dass das Hörgerät mit Strom versorgt werden kann bzw. eingeschaltet ist. In dieser Geschlossenstellung des Batteriefachs 13, d. h. der Einschaltstellung, ist das Batteriefach 13 mit dem Rahmen 10 oder einem Gehäuseteil, z. B. der oberen Gehäusehälfte 11 verrastet.

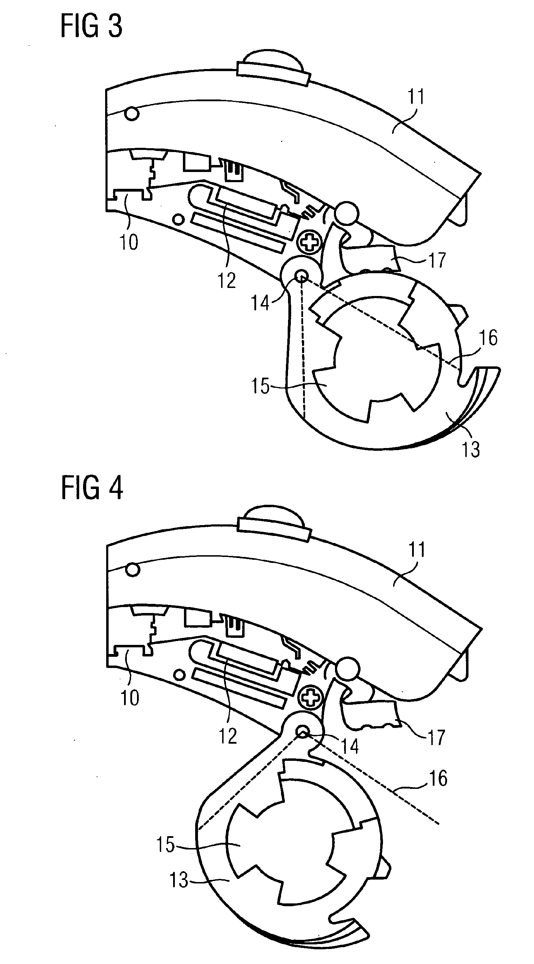

In FIG 3 ist das Batteriefach 13 in einer Zwischenposition dargestellt. Diese Zwischenposition zeichnet sich dadurch aus, dass das Batteriefach 13 um einen vorgegebenen Winkelbetrag gegenüber der Geschlossenstellung von FIG 2 geschwenkt ist. Im vorliegenden Beispiel ist das Batteriefach 13 in der Zwischenstellung um etwa 60° geschwenkt. Der Drehwinkel des Batteriefachs 13 ist in FIG 3 gegenüber der Bezugslinie 16 zu erkennen. In dieser Zwischenposition ist das Batteriefach 13 an dem Rahmen 10 eingerastet. Darüber hinaus haben die Kontakte 17 keine Verbindung mehr zu der Batterie 15, so dass das Hörgerät abgeschaltet ist.

FIG 4 zeigt das Batteriefach 13 des Hörgeräts der FIG 2 und 3 in der Offenstellung. Dies ist daran zu erkennen, dass das Batteriefach 13 gegenüber der Bezugslinie 16 um hier etwa 100° geschwenkt ist. Diese Stellung entspricht üblicherweise derjenigen, in der die Batterie 15 aus dem Hörgerät entnommen werden kann. Da sich die Batterie 15 in dieser Offenstellung weiter als in der Zwischenstellung von den Kontakten 17 wegbewegt hat, ist das Hörgerät auch in der Offenstellung abgeschaltet. Gegebenenfalls rastet das Batteriefach 13 auch in dieser Offenstellung ein.

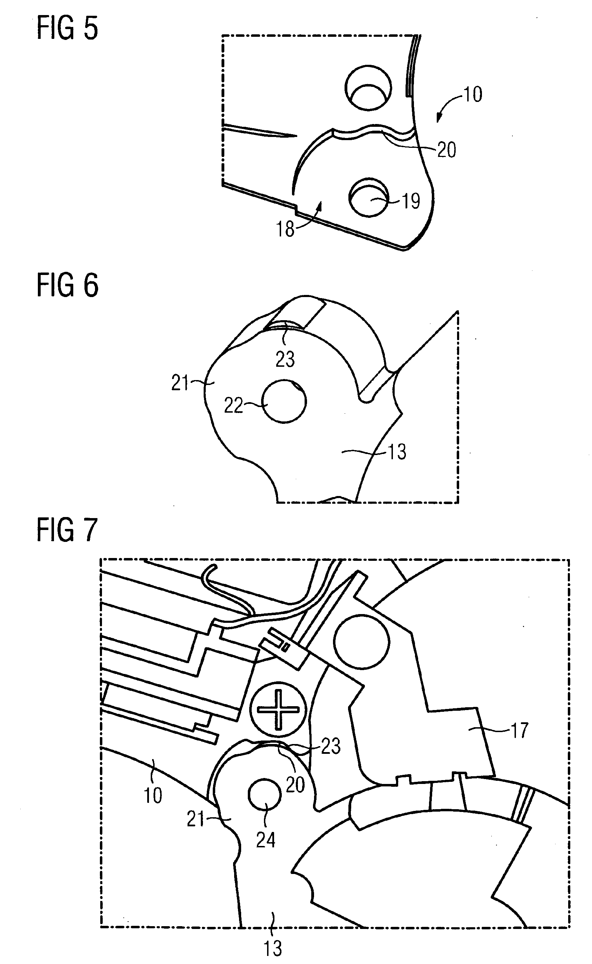

Nachfolgend wird im Zusammenhang mit den FIG 5 bis 7 der Rastmechanismus zum Einrasten des Batteriefachs 13 in der Zwischenstellung näher erläutert. Gemäß FIG 5 ist in dem Rahmen 10 eine Aussparung 18 vorgesehen. Sie besitzt eine Bohrung 19, in die eine Welle eingesetzt werden kann, welche zur Realisierung der Drehachse 14 dient. An der Wand der Aussparung 18 ist eine Rastmulde 20 realisiert. Die Aussparung 18 einschließlich der Bohrung 19 bildet einen Teil des Schwenklagers am Rahmen 10. Der Rastmechanismus mit der Rastmulde 20 ist achsnah realisiert. Insbesondere ist der Rastmechanismus näher an der Schwenkachse 14 als die Batterie 15 im Batteriefach 13, d. h. näher als der Batterieladebereich, der den Raum definiert, in dem die Batterie 15 im Batteriefach 13 eingesetzt ist.

In FIG 6 ist der batteriefachseitige Teil des Schwenklagers wiedergegeben. Er besitzt hier einen annähernd zylinderförmigen Lagerkörper 21 mit einer axial verlaufenden Längsbohrung 22 (d. h. ein ringförmiges Lagerelement), in die die Lagerwelle eingesteckt wird. An der Mantelfläche des Lagerkörpers 21 ist eine Rastnase 23 angeformt. Sie korrespondiert mit der Rastmulde 20 des Rahmens 10.

In FIG 7 ist das Schwenklager einschließlich des Rastmechanismus im zusammengebauten Zustand dargestellt. Der Lagerkörper 21 des Batteriefachs 13 ist dort mit Hilfe einer Welle 24 in der Aussparung 18 des Rahmens 10 schwenkbar gelagert. In der dargestellten Zwischenstellung, die der Stellung von FIG 3 entspricht, ist die Rastnase 23 in die Rastmulde 20 eingerastet. Um das Batteriefach in die Offen- bzw. Geschlossenstellung zu bewegen, muss die Rastnase 23 über die Erhöhungen links und rechts der Rastmulde 20 hinausgedreht werden. Dadurch ergibt sich eine gewisse Abnutzung des Rastmechanismus aufgrund der Reibung. Durch die Verwendung von zwei verschiedenen Kunststoffen unterschiedlicher Härte kann erreicht werden, dass bei der Reibung das Batteriefach 13 stärker abgenutzt wird als der Rahmen 10 bzw. das Gehäuse. Beispielsweise kann für den Rahmen 10 ein Kunststoff verwendet werden, der unter dem Namen "LCB" bzw. der Marke "Vectra" bekannt ist. Für das Batteriefach kann dann ein weicherer Kunststoff, z. B. "ABS" verwendet werden.

Der Rastmechanismus in der Nähe der Schwenkachse hat den Vorteil, dass keine Rastelemente im Außenbereich des Batteriefachs 13, d. h. in großer radialer Entfernung von der Schwenkachse, vorgesehen sein müssen. Folglich kann mit dieser Bauart eine kleinere Gesamtgröße des Hörgeräts erreicht werden.

Der Rastmechanismus gemäß den FIG 5 bis 7 gewährleistet, dass das Batteriefach 13 in einer Zwischenstellung gehalten wird, so dass sich das Hörgerät nicht unbeabsichtigt einschalten kann. Dies ist nicht der Fall bei einem Batteriefach ohne Rastmechanismus, wo das Batteriefach durch einfache Bewegung des Hörgeräts zufällig in die Ein-Stellung geschwenkt werden kann. Das Batteriefach muss also bewusst in die Ein-Stellung bzw. die Geschlossenstellung gedrückt werden, indem die Rastkraft überwunden wird.

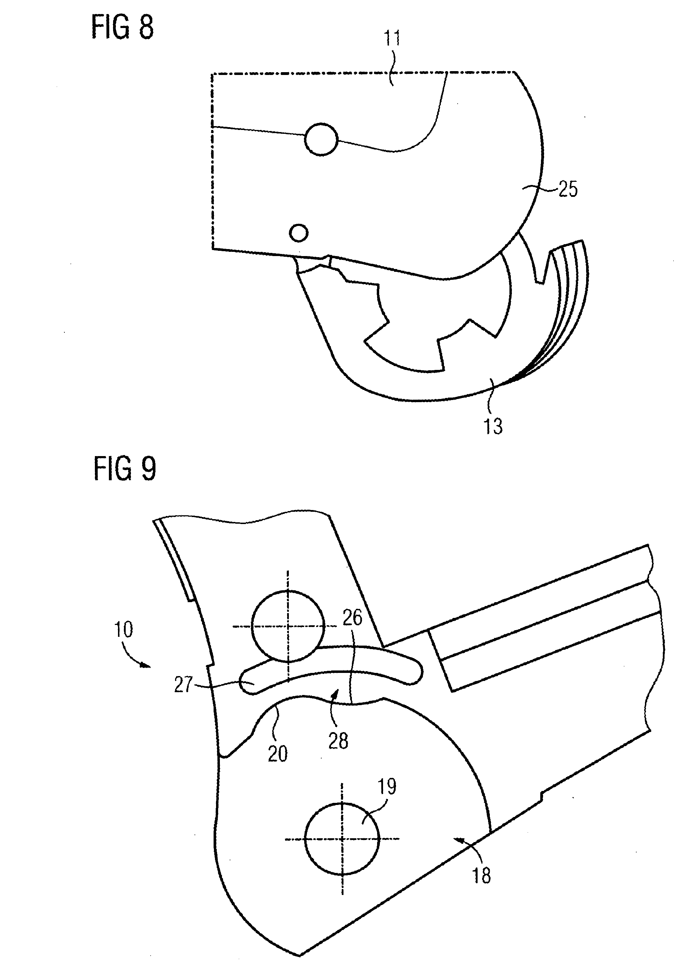

Weiterhin kann die Zwischenstellung gemäß FIG 8 dazu genutzt werden, um ein Herausfallen der Batterie aus dem Batteriefach 13 zu verhindern. Ein Gehäuseunterteil 25 ist an dem Rahmen 10 angeschraubt bzw. angesteckt und verläuft bündig mit dem Gehäuseoberteil 11. Das Batteriefach 13 befindet sich in der eingerasteten Zwischenstellung (vgl. auch FIG 3 und 7) und ein Teil des Gehäuseunterteils 25 ragt in den Raum, der durch die axiale Projektion der Batterie gebildet wird. Auf der anderen Seite des Batteriefachs, ist dies ebenso der Fall, was jedoch in FIG 8 nicht sichtbar ist. Somit wird verhindert, dass die Batterie aus dem Batteriefach 13 entnommen werden bzw. herausfallen kann.

Eine Weiterentwicklung des rahmenseitigen Teils des Rastmechanismus ist in FIG 9 dargestellt. Die FIG 9 zeigt denjenigen Abschnitt des Rahmens 10, der auch in FIG 5 dargestellt ist. Es ist also die Aussparung 18 des Schwenklagers einschließlich der Bohrung 19 und der Rastmulde 20 zu erkennen. Problematisch bei dem Rastmechanismus gemäß FIG 5 ist jedoch, wie bereits angedeutet wurde, dass die Reibung zwischen der Rastnase 23 des Batteriefachs 13 und der Erhöhung 26 bzw. den Erhöhungen an der Rastmulde 20 zu einer Abnutzung führt. Dies lässt sich zum Teil durch einen weicheren Kunststoff des Batteriefachs 13 vermeiden. Um die Abnutzung jedoch weiter zu vermindern, ist entsprechend dem Ausführungsbeispiel von FIG 9 radial hinter der Rastmulde 20 bzw. der Erhöhung 26 eine Aussparung 27 vorgesehen, so dass sich zwischen den Aussparungen 18 und 27 eine elastische Wand 28 ergibt, die die Erhöhung 26 trägt. Dadurch kann beim Überdrehen des Rastmechanismus die elastische Wand 28 in radialer Richtung bezogen auf das Schwenklager nachgeben, so dass die Reibung zwischen Rastnase 23 und Erhöhung 26 und damit auch die Abnutzung der Erhöhung 26 reduziert werden kann.

## Patentansprüche

1. Hörvorrichtung mit
- einem Gehäuse und/oder Rahmen (10) und
- einem Batteriefach (13), das in oder an dem Gehäuse oder Rahmen (10) um eine Schwenkachse (14) schwenkbar zwischen einer Offenstellung und einer Geschlossenstellung gelagert ist,
**dadurch gekennzeichnet, dass**
- das Batteriefach (13) ein ringförmiges Lagerelement (21) aufweist, in dessen Zentrum die Schwenkachse (14) verläuft und wobei das Lagerelement, am Außenumfang mit einem ersten Rastelement (23) versehen ist und
- an dem Gehäuse oder Rahmen (10) ein zweites Rastelement (20) derart angebracht ist, dass das erste Rastelement (23) in einer vorgegebenen Schwenkposition des Batteriefachs (13) zwischen der Offenstellung und der Geschlossenstellung des Batteriefachs (13) lösbar in das zweite Rastelement (20) einrastbar ist.

2. Hörvorrichtung nach Anspruch 1, wobei das erste Rastelement (23) eine Rastnase umfasst.

3. Hörvorrichtung nach Anspruch 2, wobei das Gehäuse oder der Rahmen (10) eine mit der Rastnase korrespondierende Rastmulde als zweites Rastelement (20) aufweist.

4. Hörvorrichtung nach Anspruch 3, wobei zumindest ein Teil der Rastmulde mit einer elastischen Wand (28) gebildet ist, die durch die Rastnase in radialer Richtung bezogen auf die Schwenkachse federnd bewegbar ist.

5. Hörvorrichtung nach einem der vorhergehenden Ansprüche, wobei das erste Rastelement (23) des Batteriefachs (13) aus einem weicheren Kunststoff besteht als das zweite Rastelement (20) des Gehäuses oder Rahmens.

6. Hörvorrichtung nach einem der vorhergehenden Ansprüche, wobei eine Batterie (15) aus dem Batteriefach (13) in axialer Richtung bezogen auf die Schwenkachse (14) in einer Entnahmeposition des Batteriefachs (13) entnehmbar ist, aber in der vorgegebenen Schwenkposition, in der das Batteriefach (13) eingerastet ist, durch einen Teil des Gehäuses eine Entnehmbarkeit der Batterie aus dem Batteriefach verhindert ist.

7. Hörvorrichtung nach einem der vorhergehenden Ansprüche, wobei an dem Batteriefach (13) oder dem Gehäuse oder Rahmen (10) radial innerhalb des Batterieladebereichs ein drittes Rastelement angeordnet ist, um mit dem ersten oder zweiten Rastelement (23, 20) zusammenzuwirken, so dass das Batteriefach (13) auch in einer weiteren, von der vorgegebenen Schwenkposition verschiedenen Schwenkposition einrastbar ist.

## Claims

1. Hearing apparatus having
- a housing and/or frame (10) and
- a battery compartment (13), which is mounted in or on the housing or frame (10) so as to be pivotable about an axis of rotation (14) between an open position and a closed position,
**characterised in that**
- the battery compartment (13) has an annular bearing element (21), in the centre of which runs the axis of rotation (14) and with the bearing element being provided with a first latching element (23) on the outer periphery and
- a second latching element (20) being attached to the housing or frame (10) such that the first latching element (23) can be detachably engaged in the second latching element (20) in a predetermined swivelled position of the battery compartment (13) between the open position and the closed position of the battery compartment (13).

2. Hearing apparatus according to claim 1, with the first latching element (23) being a lug.

3. Hearing apparatus according to claim 2, with the housing or the frame (10) having a latching bolt corresponding to the lug as a second latching element (20).

4. Hearing apparatus according to claim 3, with at least one part of the latching bolt being formed with an elastic wall (28), which can be moved elastically by the lug in a radial direction in respect of the axis of rotation.

5. Hearing apparatus according to one of the preceding claims, with the first latching element (23) of the battery compartment (13) consisting of a softer plastic than the second latching element (20) of the housing or frame.

6. Hearing apparatus according to one of the preceding claims, with a battery (15) being removable from the battery compartment (13) in a removal position of the battery compartment in an axial direction relative to the axis of rotation (14) (13), but in the predetermined swivelled position, in which the battery compartment (13) is engaged, removability of the battery from the battery compartment is prevented by means of a part of the housing.

7. Hearing apparatus according to one of the preceding claims, with a third latching element being arranged on the battery compartment (13) or the housing or frame (10) radially within the battery charging region so as to interact with the first or second latching element (23, 20) so that the battery compartment (13) can also be engaged in a further swivelled position which differs from the predetermined swivelled position.

## Revendications

1. Dispositif auditif comprenant
- un boîtier et/ou un cadre (10) et
- un logement de batterie (13), monté dans ou sur le boîtier ou le cadre (10) de manière à pouvoir pivoter autour d'un axe de pivotement (14) entre une position ouverte et une position fermée,
**caractérisé en ce que**
- le logement de batterie (13) présente un élément de support (21) de forme circulaire, au centre duquel passe l'axe de pivotement (14), ledit élément de support étant doté à la périphérie extérieure d'un premier élément d'encliquetage (23), et
- un deuxième élément d'encliquetage (20) étant fixé sur le boîtier ou le cadre (10) de telle sorte que dans une position prédéfinie de pivotement du logement de batterie (13) entre la position ouverte et la position fermée dudit logement de batterie (13), le premier élément d'encliquetage (23) puisse s'encliqueter de manière amovible dans le deuxième élément d'encliquetage (20).

2. Dispositif auditif selon la revendication 1, le premier élément d'encliquetage (23) comprenant un taquet d'encliquetage.

3. Dispositif auditif selon la revendication 2, le boîtier ou le cadre (10) présentant comme deuxième élément d'encliquetage (20) un creux d'encliquetage correspondant au taquet d'encliquetage.

4. Dispositif auditif selon la revendication 3, au moins une partie du creux d'encliquetage étant formée d'une paroi élastique (28), qui peut être déplacée élastiquement par le taquet d'encliquetage dans le sens radial par rapport à l'axe de pivotement.

5. Dispositif auditif selon une des revendications précédentes, le premier élément d'encliquetage (23) du logement de batterie (13) étant réalisé en une matière plastique plus souple que le deuxième élément d'encliquetage (20) du boîtier ou du cadre.

6. Dispositif auditif selon une des revendications précédentes, une batterie (15) pouvant être retirée du logement de batterie (13) dans le sens axial par rapport à l'axe de pivotement (14) dans une position de retrait du logement de batterie (13), alors que dans la position prédéfinie de pivotement, dans laquelle le logement de batterie (13) est encliqueté, la possibilité de retirer la batterie du logement de batterie est empêchée par une partie du boîtier.

7. Dispositif auditif selon une des revendications précédentes, un troisième élément d'encliquetage étant agencé sur le logement de batterie (13) ou sur le boîtier ou le cadre (10), radialement à l'intérieur de la zone de recharge de la batterie, qui est destiné à coopérer avec le premier ou le deuxième élément d'encliquetage (23, 20) de sorte que le logement de batterie (13) puisse s'encliqueter aussi dans une autre position de pivotement, différente de la position prédéfinie de pivotement.
